# DEMANDE DE BREVET EUROPEEN

(11) **EP 4 483 743 A1**
(43) Date de publication de la demande: **01.01.2025**
(21) Numéro de dépôt: 24182681.7
(22) Date de dépôt: 17.06.2024
(51) Int. Cl.: A44B 17/00, A45C 13/10

(54) **BOUTON DE PRESSION INVISIBLE**

(30) Priorité: 28.06.2023 FR 2306786
(71) Demandeur: Hermes Sellier, 75008 Paris (FR)
(72) Inventeur: ALFIERI, Marc, 13480 Cabriès (FR)
(74) Mandataire: Santarelli

(57) **Abrégé**

Système de fixation configuré pour assujettir mécaniquement au moins une première partie (2) d'un article (1) à un support quelconque (3), comportant un élément mâle (5) configuré pour être assujetti à l'un de la première partie et du support, et un élément femelle (4) configuré pour être assujetti à l'autre et pour coopérer, par déformation élastique, avec l'élément mâle lorsque la première partie est assujettie mécaniquement avec le support ; l'élément femelle étant formé par une pastille qui est globalement plate et élastiquement déformable et qui est pourvue d'un orifice traversant (40) définissant une ouverture d'introduction (42) pour l'élément mâle, le système de fixation (10) étant configuré de sorte que l'ouverture d'introduction est variable, entre une valeur minimale lorsque la pastille n'est pas sollicitée et une valeur maximale lorsque la pastille est sollicitée par l'élément mâle en vue de l'assujettissement ou le désassujettissement mécanique de la première partie et du support.

## Description

### DOMAINE TECHNIQUE DE L'INVENTION

La présente invention concerne un système de fixation configuré pour équiper un article, notamment de maroquinerie, ou bien de textile, de cosmétique ou encore d'ameublement.

L'invention concerne aussi un tel article, notamment de maroquinerie, ou bien de textile, de cosmétique ou encore d'ameublement, pourvu d'un tel système de fixation et d'au moins une première partie configurée pour être assujettie mécaniquement à un support quelconque à l'aide du système de fixation.

L'invention concerne également un procédé d'assujettissement et/ou de désassujettissement d'un tel article à l'aide d'un tel système de fixation.

### ÉTAT DE LA TECHNIQUE

On connait des articles par exemple de maroquinerie, comportant chacun une première partie et une deuxième partie assujettie mécaniquement à la première partie à l'aide de boutons dits à pression, ou boutons pression, pourvus chacun d'une partie mâle assujettie sur la première partie et d'une partie femelle assujettie sur la deuxième partie de l'article et configurée pour coopérer avec la partie mâle.

La partie mâle peut comporter une base de laquelle saille un pion ayant une portion d'extrémité élargie, tandis que la partie femelle peut comporter un corps dans lequel est ménagée une cavité interne dans laquelle saillent des lames ressorts.

La cavité interne du corps de la partie femelle définit une ouverture d'introduction pour la portion d'extrémité élargie du pion de la partie mâle et les lames de ressorts sont configurées de sorte à admettre une configuration stable déployée dans la cavité interne et une configuration rétractée.

En particulier, lorsque la portion d'extrémité élargie du pion de la partie mâle est introduite au travers de l'ouverture d'introduction dans la cavité interne du corps de la partie femelle, par l'effet d'une force de pression, ou de poussée, exercée par un utilisateur, la portion d'extrémité élargie écarte les lames ressorts qui passent de leur configuration déployée à leur configuration rétractée dans laquelle la portion d'extrémité élargie peut s'insérer dans la cavité interne.

Une fois la portion d'extrémité élargie suffisamment insérée dans la cavité interne, les lames ressorts retrouvent leur configuration stable déployée, bloquant ainsi la portion d'extrémité élargie dans la cavité interne et assujettissant incidemment la partie mâle et la partie femelle, et donc la première partie et la deuxième partie de l'article.

Le désassujettissement de la première partie et de la deuxième partie de l'article se fait par mouvement inverse, en écartant la partie mâle et la partie femelle.

### EXPOSÉ DE L'INVENTION

La présente invention vise à fournir un système de fixation configuré pour assujettir mécaniquement au moins une première partie d'un article à un support quelconque, d'un genre similaire, et qui soit particulièrement simple et commode tant à la fabrication qu'à l'utilisation.

L'invention a ainsi pour objet, selon un premier aspect, un système de fixation configuré pour assujettir mécaniquement au moins une première partie d'un article, notamment de maroquinerie, ou bien de textile, de cosmétique ou encore d'ameublement, à un support quelconque, le système de fixation comportant un élément mâle configuré pour être assujetti à l'un de la première partie et du support, et un élément femelle configuré pour être assujetti à l'autre du support et de la première partie et pour coopérer, par déformation élastique, avec l'élément mâle lorsque la première partie est assujettie mécaniquement avec le support ; le système de fixation étant caractérisé en ce que l'élément femelle est formé par une pastille globalement plate et élastiquement déformable, laquelle pastille est pourvue d'un orifice traversant définissant une ouverture d'introduction pour l'élément mâle, et en ce que le système de fixation est configuré de sorte que l'ouverture d'introduction est variable, entre une valeur minimale lorsque la pastille n'est pas sollicitée et une valeur maximale lorsque la pastille est sollicitée par l'élément mâle en vue de l'assujettissement ou le désassujettissement mécanique de la première partie et du support.

Dans le système de fixation selon l'invention, l'ouverture d'introduction pour la partie mâle, qui est définie par l'orifice traversant de la pastille, est variable par la seule déformation élastique de la pastille.

En d'autres termes, un tel système de fixation ne nécessite pas de pièces complémentaires déformables, tel que des lames de ressorts, qui sont typiquement nécessaires à l'élément femelle d'un bouton pression.

Ainsi, un tel système de fixation permet l'assujettissement ou le désassujettissement mécanique de la première partie de l'article et du support par une variation de l'ouverture d'introduction, définie par l'orifice traversant de la pastille, lorsque la pastille est sollicitée par l'élément mâle.

Des caractéristiques préférées, simples, commodes et économiques du système de fixation selon l'invention sont présentées ci-après.

L'orifice traversant ménagé dans la pastille peut être délimité par un contour interne formant un bord d'accroche pour l'élément mâle.

Le contour interne de l'orifice traversant peut être globalement circulaire, oblong ou rectangulaire et l'élément mâle peut présenter une tête de forme sensiblement complémentaire.

La pastille peut être pourvue de zones de déformation autour de l'orifice traversant.

Les zones de déformation peuvent être formées d'encoches et/ou de fentes s'étendant radialement depuis l'orifice traversant.

La pastille peut présenter un contour externe globalement circulaire.

La pastille peut venir de matière avec une pièce de renfort de la première partie de l'article ou du support.

L'élément femelle peut comporter plusieurs pastilles globalement plates et élastiquement déformables disposées de manière adjacente dans la première partie ou dans le support, et avec leurs orifices traversant respectifs en regard les uns des autres.

Les pastilles peuvent être séparées par un premier élément de matière de la première partie ou du support.

L'élément mâle peut être formé par un pion pourvu d'une tête s'étendant en saillie de la première partie ou du support et configurée pour être introduite au moins partiellement au travers de l'orifice traversant de la pastille.

L'orifice traversant ménagé dans la pastille peut être délimité par un contour interne formant un bord d'accroche, et la tête du pion peut être pourvue d'une protubérance configurée pour venir solliciter la pastille autour de son orifice traversant pour faire varier l'ouverture d'introduction et d'un renfoncement contre lequel vient en appui le bord d'accroche lorsque la première partie est assujettie mécaniquement avec le support.

Le pion peut être pourvu d'une base sur laquelle est assujettie mécaniquement la tête, avec un deuxième élément de matière de la première partie ou du support qui est pris en sandwich entre la tête et la base.

L'invention a aussi pour objet, selon un deuxième aspect, un article, notamment de maroquinerie, ou bien de textile, de cosmétique ou encore d'ameublement, comportant un système de fixation présenté ci-dessus et au moins une première partie configurée pour être assujettie sur un support quelconque à l'aide du système de fixation.

L'invention a également pour objet, selon un troisième aspect, un procédé d'assujettissement d'une première partie d'un article, notamment de maroquinerie, ou bien de textile, de cosmétique ou encore d'ameublement, à un support quelconque, à l'aide d'un système de fixation présenté ci-dessus, comportant l'étape d'introduire l'élément mâle dans la pastille par l'ouverture d'introduction, en sollicitant par déformation élastique la pastille de sorte à agrandir temporairement son orifice traversant.

L'invention a également pour objet, selon un quatrième aspect, un procédé de désassujettissement d'une première partie d'un article notamment de maroquinerie, ou bien de textile, de cosmétique ou encore d'ameublement, à un support quelconque, à l'aide d'un système de fixation présenté ci-dessus, comportant l'étape d'extraire l'élément mâle de la pastille par l'ouverture d'introduction, en sollicitant par déformation élastique la pastille de sorte à agrandir temporairement son orifice traversant.

### BRÈVE DESCRIPTION DES FIGURES

La figure 1 représente schématiquement et partiellement, en perspective, un article pourvu d'une première partie assujettie mécaniquement à un support quelconque, ici formé par une deuxième partie de l'article, à l'aide d'un système de fixation conforme à l'invention.
La figure 2 est une vue similaire à celle de la figure 1, dans laquelle la première partie de l'article est à distance de sa deuxième partie.
La figure 3 représente schématiquement et partiellement, en perspective éclatée, l'article visible sur les figures 1 et 2.
La figure 4 est une vue en coupe médiane de l'article visible sur les figures 1 à 3, avec la première partie à distance de la deuxième partie.
La figure 5 est une vue en coupe similaire à celle de la figure 4, la première partie et la deuxième partie étant assemblées.
La figure 6 est une vue de détail de la figure 5.
La figure 7 est une vue en perspective d'une première variante de réalisation d'un élément femelle du système de fixation.
La figure 8 est une vue en perspective d'une deuxième variante de réalisation de l'élément femelle du système de fixation.
La figure 9 est une vue en perspective d'une troisième variante de réalisation de de l'élément femelle du système de fixation.
La figure 10 est une vue en perspective d'une quatrième variante de réalisation de l'élément femelle du système de fixation.
La figure 11 est une vue similaire à celle de la figure 2, montrant un système de fixation selon un autre mode de réalisation.

### DESCRIPTION DÉTAILLÉE DE L'INVENTION

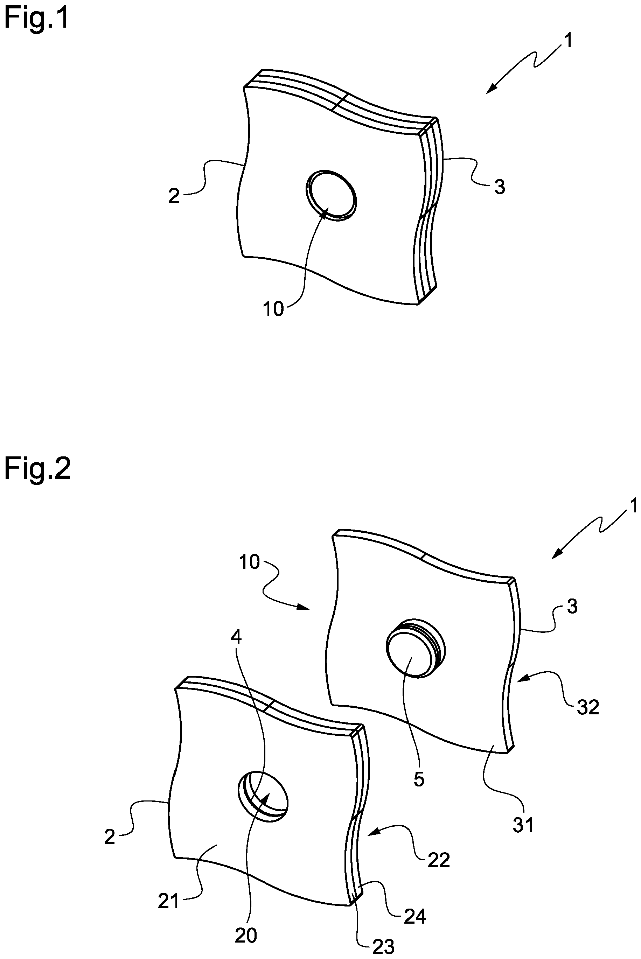

Les figures 1 et 2 illustrent partiellement un article 1, ici de maroquinerie, pourvu d'une première partie 2 et d'une deuxième partie 3 formant un support.

Sur la figure 1, la première partie 2 et la deuxième partie 3 sont assujetties mécaniquement ensemble à l'aide d'un système de fixation 10, tandis que sur la figure 2, la première partie 1 et la deuxième partie 2 sont à distance l'une de l'autre.

La première partie 2 de l'article 1 est ici formée d'un premier élément de matière 23 et d'un deuxième élément de matière 24 adjacent et assujetti au premier élément de matière 23.

La première partie 2 présente une première face externe 21 formée sur le premier élément de matière 23 et une deuxième face externe 22, qui est opposée à la première face externe 21, et qui est formée sur le deuxième élément de matière 24.

La première partie 2 présente en outre un premier orifice 20 traversant le premier élément de matière 23 et le deuxième élément de matière 24 et débouchant de part et d'autre de la première face externe 21 et de la deuxième face externe 22.

La deuxième partie 3 de l'article 1 est formée ici d'un élément unique de matière, appelé aussi troisième élément de matière, et présente une troisième face interne 31 et une troisième face externe 32 opposée à la troisième face interne 31.

Pour l'assemblage de la première partie 2 de l'article 1 avec la deuxième partie 3 de l'article 1, la deuxième face externe 22 de la première partie 2 est disposée en regard de la troisième face interne 31 de la deuxième partie 3, comme visible sur la figure 2.

Dans l'exemple illustré, la deuxième partie 3 est ici pourvue d'un deuxième orifice 30, ménagé de sorte à traverser la deuxième partie 3 de part et d'autre de ses troisième face externe 31 et quatrième face externe 32.

Le système de fixation 10 comporte un élément mâle 5 assujetti à la deuxième partie 3 de l'article 1, et un élément femelle 4 qui est assujetti à la première partie 2 de l'article 1 et qui est configuré pour coopérer, par déformation élastique, avec l'élément mâle 5 lorsque la première partie 2 est assujettie mécaniquement avec la deuxième partie 3 (voir ci-après).

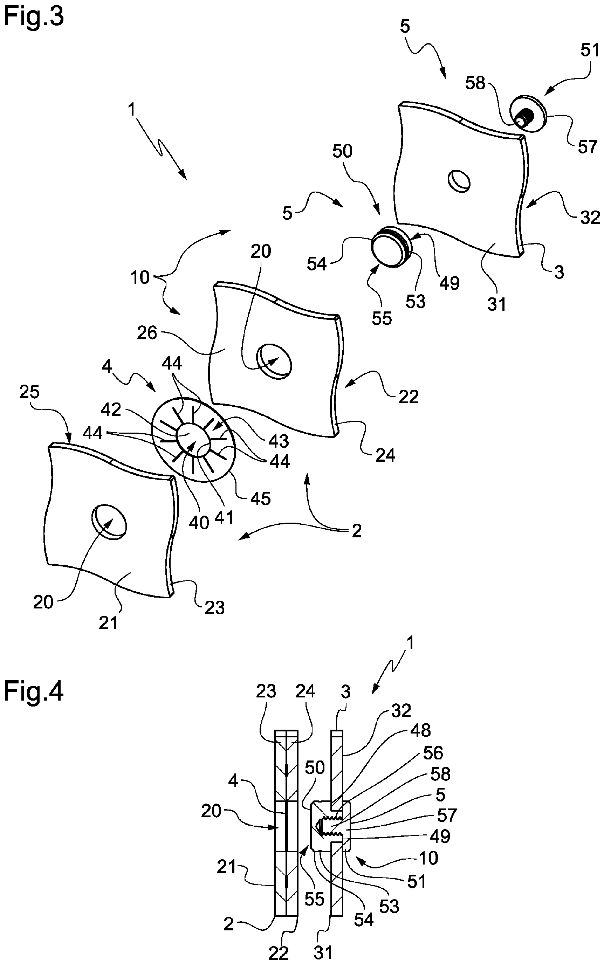

En référence aux figure 3 à 6, l'élément femelle du système de fixation 10 est formé par une pastille 4 globalement plate et élastiquement déformable, tandis que l'élément mâle du système de fixation 10 est formé par un pion 5.

En particulier, la pastille 4 est pourvue d'un orifice traversant 40 définissant une ouverture d'introduction 42 pour le pion 5.

La pastille 4 peut être réalisée en métal ou en matière plastique ou composite.

Le système de fixation 10 est configuré de sorte que l'ouverture d'introduction 42 est variable, entre une valeur minimale lorsque la pastille 4 n'est pas sollicitée et une valeur maximale lorsque la pastille 4 est sollicitée par le pion 5 en vue de l'assujettissement ou le désassujettissement mécanique de la première partie 2 et de la deuxième partie 3.

La pastille 4 comporte un contour interne 41 délimitant l'orifice traversant 40, et un contour externe 45 ici globalement circulaire.

Le contour interne 41 forme un bord d'accroche pour le pion 5.

Le contour interne 41 de l'orifice traversant 40 est ici globalement circulaire.

Dans l'exemple illustré, la pastille 4 est pourvue d'une pluralité de zones de déformation 43 agencées autour de l'orifice traversant 40.

Les zones de déformation 43 comportent des fentes 44 s'étendant radialement depuis l'orifice traversant 40.

En d'autres termes, les fentes 44 s'étendent depuis le contour interne 41 vers le contour externe 45 de la pastille 4.

Dans l'exemple illustré, la pastille 4 comporte dix fentes 44 qui sont globalement et régulièrement réparties autour de l'orifice traversant 40.

Ces fentes 44 permettent la déformation de la pastille 4 au niveau de son contour interne 41 et ainsi la variabilité de l'ouverture d'introduction 42.

La pastille 4 est ici configurée pour être prise en sandwich entre le premier élément de matière 23 et le deuxième élément de matière 24 de la première partie 2 de l'article 1.

En particulier, la pastille 4 est interposée entre une première face interne 25 du premier élément de matière 23 qui est opposée à sa première face externe 21, et une deuxième face interne 26 du deuxième élément de matière 24 qui est opposée à sa deuxième face externe 22.

En d'autres termes, le premier élément de matière 23 est assujetti par sa première face interne 25 à la deuxième face interne 26 du deuxième élément de matière 24, avec la pastille 4 prise en sandwich et immobilisée en position, avec l'orifice traversant 40 de la pastille 4 qui est globalement disposé en regard du premier orifice 20 de la première partie 2, voire centré avec le premier orifice 20.

On notera que l'orifice traversant 40 de la pastille 4 présente un diamètre dit interne qui est sensiblement égal ou légèrement inférieur au diamètre du premier orifice 20 ménagé dans la première partie 2 de l'article 1.

En d'autres termes, le contour interne 41 de la pastille 4 vient sensiblement à fleur ou saille légèrement dans le premier orifice 20, en particulier lorsque l'ouverture d'introduction 42 est à sa valeur minimale.

La pastille 4 est ainsi insérée entre le premier élément de matière 23 et le deuxième élément de matière 24, sans détériorer le premier élément de matière 23 et/ou le deuxième élément de matière 24, et en étant invisible ou quasiment invisible depuis l'extérieure de l'article 1.

En outre, le pion 5 comporte ici une base 51 et une tête 50 en saillie de la base 51.

La base 51 du pion 5 présente un socle 57 et une tige filetée 58 en saillie du socle 57.

Le socle 57 est configuré pour être disposé contre la troisième face externe 32 de la deuxième partie 3 de l'article 1, avec la tige filetée 58 qui traverse un deuxième orifice 30 ménagé dans la deuxième partie 3 et débouchant de part et d'autre de ses troisième face externe 32 et troisième face interne 31.

La tête 50 est configurée pour être vissée sur la base 51.

En particulier, la tête 50 présente ici une cavité interne taraudée 56 débouchant à une extrémité proximale 49 de la tête 50.

La tête 50 est configurée pour venir en appui, par le biais d'un épaulement 48 ménagé du côté de son extrémité proximale 49, sur la troisième face interne 31 de la deuxième partie 3, avec l'extrémité proximale 49 qui est introduite dans le deuxième orifice 30.

La cavité interne taraudée 56 de la tête 50 est configurée pour recevoir la tige filetée 58 de la base 51 pour leur assujettissement mécanique.

Ainsi, le pion 5 a sa tête 50 qui s'étend en saillie de la troisième face interne 31 de la deuxième partie 3 de l'article 1, avec la deuxième partie 3 de l'article 1 qui est partiellement prise en sandwich entre la tête 50 et la base 51 du pion 5.

La tête 50 a ici une forme sensiblement complémentaire au contour interne 41 de l'orifice traversant 40 de la pastille 4, notamment globalement circulaire.

Dans l'exemple illustré, la tête 50 présente un contour externe 54 s'étendant entre l'extrémité proximale 49 et une extrémité distale 55 opposée à l'extrémité proximale 49, ainsi qu'un renfoncement 53 ménagé circonférentiellement sur le contour externe 54, du côté de l'extrémité distale 55.

Le contour externe 54 de la tête 50 situé entre le renfoncement 53 et l'extrémité distale 55 forme une protubérance de la tête 50.

On notera que la protubérance de la tête 50 peut présenter une portion biseautée en direction de l'extrémité distale 55.

On notera également que la tête 50 présente un diamètre externe sensiblement égal ou inférieur au premier orifice 20 de la première partie 2 de l'article 1 et supérieur au diamètre interne de la pastille 4, lorsque l'ouverture d'introduction 42 présente sa valeur minimale.

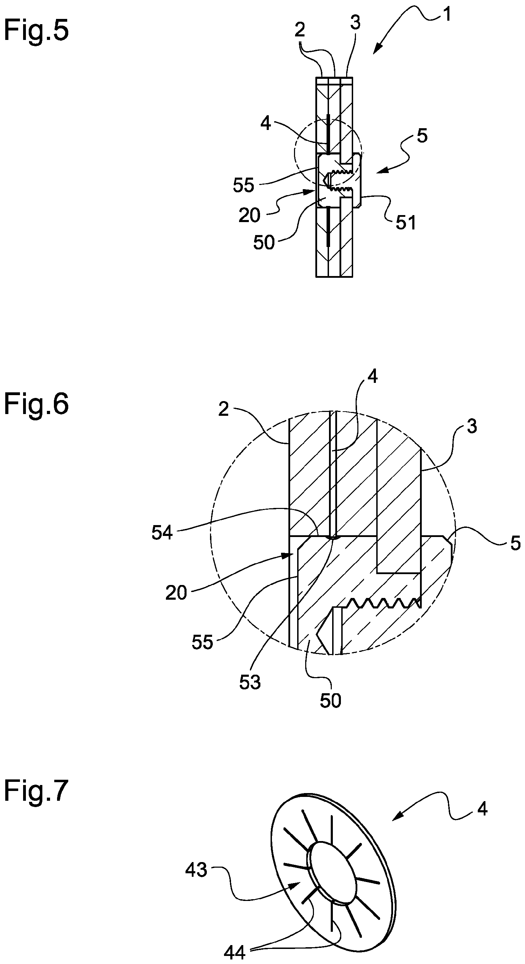

On va maintenant décrire, en référence en particulier aux figures 5 et 6, la coopération du pion 5 avec la pastille 4 et donc l'assemblage du deuxième article 3 avec le premier article 2.

La tête 50 du pion 5 est introduite au moins partiellement dans le premier orifice 20 de la première partie 2 et au travers de l'ouverture d'introduction 42 délimitée par le contour interne 41 de la pastille 4, c'est-à-dire dans l'orifice traversant 40 de cette pastille 4.

En particulier, la protubérance définie par la portion du contour externe 54 de la tête 50 située entre le renfoncement 53 et l'extrémité distale 55 vient solliciter le contour interne 41 de la pastille 4 et agrandir l'ouverture d'introduction 42 par déformation de la pastille 4 au niveau des zones de déformation 43.

En d'autres termes, les fentes 44 s'écartent pour élargir l'ouverture d'introduction 42 depuis sa valeur minimale vers une valeur plus proche de sa valeur maximale, en fonction du diamètre de la tête 50 et ainsi laisser passer l'extrémité distale 55 de la tête 50 jusqu'au renfoncement 53.

Au niveau du renfoncement 53, le contour interne 41 de la pastille 4 n'est plus ou est moins sollicité de sorte que l'ouverture d'introduction 42 se rétrécit jusqu'à ce que le bord d'accroche de la pastille 4 vienne dans le renfoncement 53 de la tête 50.

Dans cette configuration, la tête 50 du pion 5 est assemblée avec la pastille 4 et le deuxième article 3 est assujetti mécaniquement avec le premier article 2.

Le désassujettissement mécanique de la première partie 2 avec la deuxième partie 3 de l'article 1 est réalisé selon un mouvement inverse à celui décrit ci-dessus, mais avec un effet similaire sur l'ouverture d'introduction 42 de la pastille 4.

L'extraction du pion 5 par l'ouverture d'introduction 42 se fait en sollicitant par déformation élastique les zones de déformation 43 de la pastille 4, avec les fentes 44 qui s'écartent pour élargir l'ouverture d'introduction 42 depuis la valeur correspondant au diamètre du renfoncement 53 de la tête 50 à une valeur plus proche de sa valeur maximale, et ainsi laisser ressortir la tête 50 de l'orifice traversant 40 et du premier orifice 20.

Dans la description faite de la pastille 4 en référence notamment aux figures 3 à 6, cette dernière présente un contour externe 45 de diamètre externe déterminé et d'épaisseur déterminée. Les zones de déformation 43 et donc les fentes 44 ménagées dans cette pastille 4 présentent des dimensions fonction de ce diamètre externe déterminé et de cette épaisseur déterminée, et aussi des valeurs minimale et maximale souhaitées de l'ouverture d'introduction 42.

La figure 7 montre une pastille 4 qui diffère de la pastille décrite ci-dessus seulement en ce qu'elle présente un contour externe de diamètre externe plus important et une épaisseur aussi plus importante, de sorte que les zones de déformation 43 et les fentes 44 ménagées dans cette pastille 4 peuvent être par exemple plus grandes.

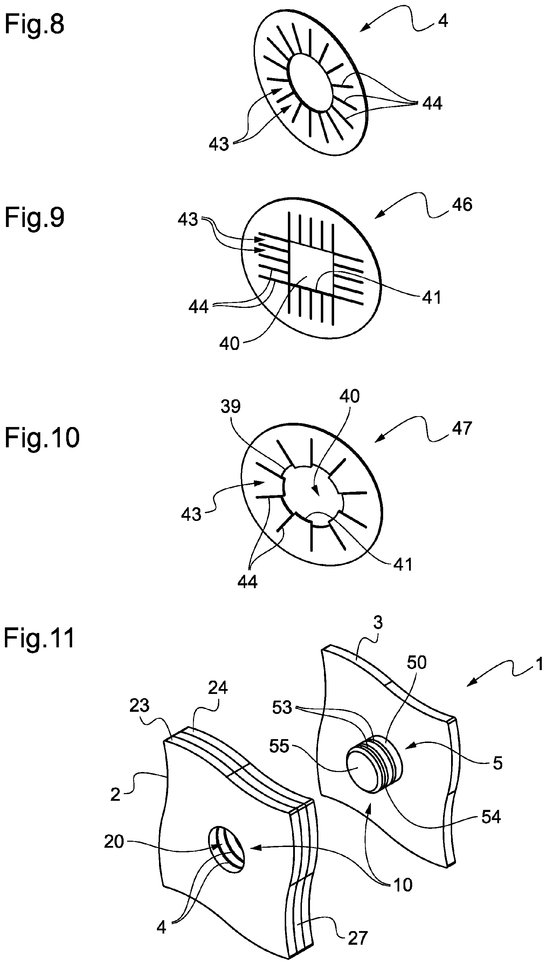

La figure 8 montre une pastille 4 qui diffère de la pastille décrite en référence aux figures 3 à 6 seulement en ce qu'elle comporte un nombre plus important de fentes 44, en particulier seize, formant les zones de déformation 43.

La figure 9 illustre une pastille 46 qui diffère de la pastille 4 décrite en référence aux figures 3 à 6 en ce que l'orifice traversant 40 présente un contour interne 41 globalement rectangulaire plutôt que circulaire. Il en est donc de même de l'ouverture d'introduction et il doit donc en être de même de la tête du pion.

Dans la pastille 46, les zones de déformation 43 présentent des fentes 44 qui s'étendent depuis le contour interne 41 vers un contour externe, sensiblement parallèlement entre elles depuis un côté respectif du rectangle formé par le contour interne.

La figure 10 illustre une pastille 47 qui diffère de la pastille 4 décrite en référence aux figures 3 à 6 en ce que les zones de déformation 43 présentent, en plus des fentes 44 qui s'étendent depuis le contour interne 41 de l'orifice traversant 40, des échancrures 39 ménagées régulièrement le long du contour interne 41.

La figure 11 est une vue similaire à celle de la figure 2, montrant un article 1 avec sa première partie 2 à distance de sa deuxième partie 3 et le système de fixation 10 associé.

Le système de fixation 10 se distingue de celui déjà décrit en référence aux figures précédentes, en ce qu'il est pourvu de deux pastilles 4 et de deux renfoncements 53 ménagés sur le contour externe 54 de la tête 50 du pion 50.

La première partie 2 de l'article 1 comporte un élément de matière intermédiaire 27 interposé entre le premier élément de matière 23 et le deuxième élément de matière 24, avec une des pastilles 4 qui est prise en sandwich entre le premier élément de matière 23 et l'élément de matière intermédiaire 27 et l'autre des pastilles 4 qui est prise en sandwich entre le deuxième élément de matière 24 et l'élément de matière intermédiaire 27.

Les deux pastilles 4 peuvent être identiques ou différentes.

Par exemple, elles peuvent présenter des épaisseurs différentes et ainsi générer deux forces de sollicitation pour l'assemblage de la première partie avec la deuxième partie, et/ou deux positions d'assemblage.

En effet, le renfoncement 53 le plus proche de l'extrémité distale 55 peut coopérer avec la pastille 4 prise en sandwich entre le deuxième élément de matière 24 et l'élément de matière intermédiaire 27, de sorte que la première partie 2 et la deuxième partie 3 sont assujetties selon une première position d'assemblage.

En outre, le renfoncement 53 le plus proche de l'extrémité distale 55 peut coopérer avec la pastille 4 prise en sandwich entre le premier élément de matière 23 et l'élément de matière intermédiaire 27 et l'autre renfoncement 53, plus éloigné de l'extrémité distale 55, peut coopérer avec la pastille 4 prise en sandwich entre le deuxième élément de matière 24 et l'élément de matière intermédiaire 27, de sorte que la première partie 2 et la deuxième partie 3 sont assujetties selon une deuxième position d'assemblage, où la tête 50 est enfoncée plus profondément dans le premier orifice 20 de la première partie 2 de l'article 1.

Dans le système de fixation 10 décrit ci-dessus, l'ouverture d'introduction 42 qui est définie par l'orifice traversant 40 de la pastille 4, est variable par la seule déformation élastique de la pastille 4.

En d'autres termes, un tel système de fixation 10 ne nécessite pas de pièces complémentaires déformables, tel que des lames de ressorts, qui sont typiquement nécessaires à l'élément femelle d'un bouton pression.

Ainsi, un tel système de fixation 10 permet l'assujettissement ou le désassujettissement mécanique de la première partie 2 de l'article 1 et de la deuxième partie 3 de l'article 1 par une variation de l'ouverture d'introduction 42, définie par l'orifice traversant 40 de la pastille 4, lorsque la pastille 4 est sollicitée par le pion 5.

Des variantes non illustrées sont décrites ci-dessous.

L'article peut être un article de bijouterie, ou bien de textile, de cosmétique ou encore d'ameublement plutôt qu'un article de maroquinerie.

La première partie de l'article peut être formée d'un unique élément de matière.

La deuxième partie de l'article peut être formée par plusieurs éléments de matière.

Le support peut ne pas être formé par une deuxième partie de l'article, mais plutôt être distinct de cet article.

La pastille peut être dans un matériau élastiquement déformable et ne comporter aucune encoche et/ou fente, l'ouverture d'introduction de la pastille étant alors variable par la seule déformation élastique de son orifice traversant.

La pastille peut venir de matière avec une pièce de renfort de la première partie de l'article ou du support.

Le contour interne de l'orifice traversant de la pastille peut être oblong ou bien rectangulaire, ou de toutes autres formes.

La pastille peut être pourvue d'une seule zone de déformation autour de l'orifice traversant.

Les zones de déformation peuvent être formées d'encoches ou d'un mélange de fentes et d'encoches.

Le contour externe de la pastille peut être oblong ou bien rectangulaire, ou de toutes autres formes.

La pastille peut être configurée pour être assujettie à la deuxième partie de l'article formant support, plutôt qu'à la première partie, et le pion est alors assujetti à la première partie plutôt qu'à la deuxième partie de l'article.

Le pion peut comporter une tête de forme oblongue ou bien rectangulaire, ou de toutes autres formes complémentaires plutôt que circulaire.

La protubérance ménagée sur la tête du pion peut présenter un diamètre plus grand que celui de la tête du pion.

La tête et la base du pion peuvent être assujettis par clipsage, sertissage, soudage ou tout autre assemblage approprié plutôt que par vissage.

Le pion peut être réalisé en une seule pièce et être assujetti à la première partie ou la deuxième partie de l'article par collage, couture ou tout autre procédé d'assujettissement approprié.

Dans les exemple illustrés, le premier orifice 20 est traversant, mais il pourrait être borgne, avec notamment un élément de matière additionnel disposé sur la première face externe et couvrant le premier orifice.

Plus généralement, l'invention ne se limite pas aux exemples décrits et représentés.

## Revendications

1. Système de fixation configuré pour assujettir mécaniquement au moins une première partie (2) d'un article (1), notamment de maroquinerie, ou bien de textile, de cosmétique ou encore d'ameublement, à un support (3) quelconque, le système de fixation comportant un élément mâle (5) configuré pour être assujetti à l'un de la première partie (2) et du support (3), et un élément femelle (4) configuré pour être assujetti à l'autre du support (3) et de la première partie (2) et pour coopérer, par déformation élastique, avec l'élément mâle (5) lorsque la première partie (2) est assujettie mécaniquement avec le support (3) ; le système de fixation étant **caractérisé en ce que** l'élément femelle (4) est formé par une pastille (4) globalement plate et élastiquement déformable, laquelle pastille (4) est pourvue d'un orifice traversant (40) définissant une ouverture d'introduction (42) pour l'élément mâle (5), et **en ce que** le système de fixation est configuré de sorte que l'ouverture d'introduction (42) est variable, entre une valeur minimale lorsque la pastille (4) n'est pas sollicitée et une valeur maximale lorsque la pastille (4) est sollicitée par l'élément mâle (5) en vue de l'assujettissement ou le désassujettissement mécanique de la première partie (2) et du support (3).

2. Système de fixation selon la revendication 1, **caractérisé en ce que** l'orifice traversant (40) ménagé dans la pastille (4) est délimité par un contour interne (41) formant un bord d'accroche pour l'élément mâle (5).

3. Système de fixation selon la revendication 2, **caractérisé en ce que** le contour interne (41) de l'orifice traversant (40) est globalement circulaire, oblong ou rectangulaire et l'élément mâle (5) présente une tête (50) de forme sensiblement complémentaire.

4. Système de fixation selon l'une quelconque des revendications 1 à 3, **caractérisé en ce que** la pastille (4) est pourvue de zones de déformation (43) autour de l'orifice traversant (40).

5. Système de fixation selon la revendication 4, **caractérisé en ce que** les zones de déformation (43) sont formées d'encoches et/ou de fentes (44) s'étendant radialement depuis l'orifice traversant (40).

6. Système de fixation selon l'une quelconque des revendications 1 à 5, **caractérisé en ce que** la pastille (4) présente un contour externe (45) globalement circulaire.

7. Système de fixation selon l'une quelconque des revendications 1 à 5, **caractérisé en ce que** la pastille (4) vient de matière avec une pièce de renfort de la première partie (2) de l'article (1) ou du support (3).

8. Système de fixation selon l'une quelconque des revendications 1 à 7, **caractérisé en ce que** l'élément femelle (4) comporte plusieurs pastilles (4) globalement plates et élastiquement déformables disposées de manière adjacente dans la première partie (2) ou dans le support (3), et avec leurs orifices traversant (40) respectifs en regard les uns des autres.

9. Système de fixation selon la revendication 8, **caractérisé en ce que** les pastilles (4) sont séparées par un premier élément de matière (24) de la première partie (2) ou du support (3).

10. Système de fixation selon l'une quelconque des revendications 1 à 7, **caractérisé en ce que** l'élément mâle (5) est formé par un pion pourvu d'une tête (50) s'étendant en saillie de la première partie (2) ou du support (3) et configurée pour être introduite au moins partiellement au travers de l'orifice traversant (40) de la pastille (4).

11. Système de fixation selon la revendication 10, **caractérisé en ce que** l'orifice traversant (40) ménagé dans la pastille (4) est délimité par un contour interne (41) formant un bord d'accroche, et la tête (50) du pion est pourvue d'une protubérance configurée pour venir solliciter la pastille (4) autour de son orifice traversant (40) pour faire varier l'ouverture d'introduction (42), et d'un renfoncement (53) contre lequel vient en appui le bord d'accroche lorsque la première partie (2) est assujettie mécaniquement avec le support (3).

12. Système de fixation selon l'une des revendications 10 et 11, **caractérisé en ce que** le pion est pourvu d'une base (51) sur laquelle est assujettie mécaniquement la tête (50), avec un deuxième élément de matière de la première partie (2) ou du support (3) qui est pris en sandwich entre la tête (50) et la base (51).

13. Article, notamment de maroquinerie, ou bien de textile, de cosmétique ou encore d'ameublement, comportant un système de fixation (10) selon l'une quelconque des revendications 1 à 12 et au moins une première partie (2) configurée pour être assujettie sur un support (3) quelconque à l'aide du système de fixation.

14. Procédé d'assujettissement d'une première partie (2) d'un article (1) notamment de maroquinerie, ou bien de textile, de cosmétique ou encore d'ameublement, à un support (3) quelconque, à l'aide d'un système de fixation (10) selon l'une quelconque des revendications 1 à 12, comportant l'étape d'introduire l'élément mâle (5) dans la pastille (4) par l'ouverture d'introduction (42), en sollicitant par déformation élastique la pastille (4) de sorte à agrandir temporairement son orifice traversant (40).

15. Procédé de désassujettissement d'une première partie (2) d'un article (1), notamment de maroquinerie, ou bien de textile, de cosmétique ou encore d'ameublement, à un support (3) quelconque, à l'aide d'un système de fixation (10) selon l'une quelconque des revendications 1 à 12, comportant l'étape d'extraire l'élément mâle (5) de la pastille (4) par l'ouverture d'introduction (42), en sollicitant par déformation élastique la pastille (4) de sorte à agrandir temporairement son orifice traversant (40).
